# EUROPEAN PATENT APPLICATION

(11) **EP 4 733 341 A1**
(43) Date of publication of application: **29.04.2026**
(21) Application number: 24845697.2
(22) Date of filing: 26.07.2024
(51) Int. Cl.: C08G 18/18, C08G 18/38, G02B 1/04

(54) **POLYMERIZABLE COMPOSITION AND METHOD FOR PRODUCING SAME, RESIN, MOLDED BODY, OPTICAL MATERIAL, AND LENS**

(30) Priority: 27.07.2023 JP 2023122891
(71) Applicant: Mitsui Chemicals, Inc., Tokyo 104-0028 (JP)
(72) Inventor: MIYANAGA, Tomoharu, Omuta-shi, Fukuoka 836-8610 (JP); SUESUGI, Kouji, Omuta-shi, Fukuoka 836-8610 (JP); MATSUI, Yusuke, Omuta-shi, Fukuoka 836-8610 (JP); ITO, Shinsuke, Omuta-shi, Fukuoka 836-8610 (JP)
(74) Representative: Hoffmann Eitle
(86) International application number: PCT/JP2024/026836
(87) International publication number: WO 2025/023323

(57) **Abstract**

A polymerizable composition, including: a polyiso(thio)cyanate compound (A); an active hydrogen compound (B); a nitrogen-containing compound (C), which is at least one of a nitrogen-containing aromatic heterocyclic compound or a tertiary amine compound; and water, wherein a content of water is 1,900 ppm by mass or less with respect to a total amount of the polymerizable composition.

## Description

### Technical Field

The present disclosure relates to: a polymerizable composition and a production method thereof; a resin; a molded body; an optical material; and a lens.

### Background Art

As a polymerizable composition for producing a resin optical material (e.g., a lens), a polymerizable composition that contains an active hydrogen compound (e.g., a polythiol compound) and a polyiso(thio)cyanate compound is used in some cases. By polymerizing the monomers (i.e., the active hydrogen compound and the polyiso(thio)cyanate compound) contained in this polymerizable composition, an optical material containing a resin is obtained.

For example, as a polymerizable composition that can yield a resin molded body in which cloudiness and striae are suppressed, Patent Document 1 discloses a polymerizable composition containing:
a di- or higher functional iso(thio)cyanate compound,
a di- or higher functional active hydrogen compound (e.g., a polythiol compound), and
a non-tin catalyst consisting of a compound having a specific chemical structure and a pKa of from 1 to 9 (e.g., 2-methylpyrazine, *β*-picoline, *γ*-picoline, 2,6-lutidine, 3,5-lutidine, 3-chloropyridine, triallylamine, and trioctylamine).

Patent Document 1: WO 2018/079829

### SUMMARY OF THE INVENTION

### Technical Problem

However, when the polymerizable composition disclosed in Patent Document 1 that contains the above-described specific non-tin catalyst is used, although cloudiness and striae can be suppressed in the resulting resin, devitrification (i.e., devitrification evaluated based on the degree of devitrification) cannot be suppressed in some cases.

An object of one aspect of the disclosure is to provide: a polymerizable composition containing a polyiso(thio)cyanate compound (A), an active hydrogen compound (B), a nitrogen-containing compound (C) which is at least one of a nitrogen-containing aromatic heterocyclic compound or a tertiary amine compound, and water, from which composition a resin in which cloudiness, bubbles, and devitrification are suppressed can be produced; a method of producing the polymerizable composition; and a resin, a molded body, and a lens, in which cloudiness, bubbles, and devitrification are suppressed.

### Solution to Problem

Means for solving the above-described problems encompass the following aspects.
<1> A polymerizable composition, comprising:
   a polyiso(thio)cyanate compound (A);
   an active hydrogen compound (B);
   a nitrogen-containing compound (C), which is at least one of a nitrogen-containing aromatic heterocyclic compound or a tertiary amine compound; and
   water,
   wherein a content of water is 1,900 ppm by mass or less with respect to a total amount of the polymerizable composition.
<2> The polymerizable composition according to <1>, wherein the nitrogen-containing compound (C) contains at least one of a compound represented by the following Formula (1) or a compound represented by the following Formula (2): 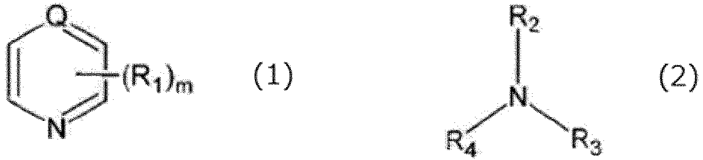
   wherein, in Formula (1), each of m R₁s independently represents a linear alkyl group having from 1 to 20 carbon atoms, a branched alkyl group having from 3 to 20 carbon atoms, a cycloalkyl group having from 3 to 20 carbon atoms, or a halogen atom; Q represents a carbon atom or a nitrogen atom; and m represents an integer from 0 to 5, and
   wherein, in Formula (2), each of R₂, R₃, and R₄ independently represents a linear alkyl group having from 3 to 20 carbon atoms, a branched alkyl group having from 3 to 20 carbon atoms, a cycloalkyl group having from 3 to 20 carbon atoms, or an allyl group; and R₂ and R₃ are optionally bonded to each other to form a ring.
<3> The polymerizable composition according to <2>, wherein
   the compound represented by Formula (1) is at least one selected from the group consisting of 2-methylpyrazine, pyridine, *α*-picoline, *β*-picoline, *γ*-picoline, 2,6-lutidine, 3,5-lutidine, 2,4,6-trimethylpyridine, 3-chloropyridine, 2-ethylpyridine, and 3-ethylpyridine, and
   the compound represented by Formula (2) is at least one selected from the group consisting of triallylamine and trioctylamine.
<4> The polymerizable composition according to any one of <1> to <3>, wherein the polyiso(thio)cyanate compound (A) contains at least one selected from the group consisting of pentamethylene diisocyanate, hexamethylene diisocyanate, xylylene diisocyanate, isophorone diisocyanate, bis(isocyanatomethyl)cyclohexane, bis(isocyanatocyclohexyl)methane, 2,5-bis(isocyanatomethyl)bicyclo-[2.2.1]-heptane, 2,6-bis(isocyanatomethyl)bicyclo-[2.2.1]-heptane, tolylene diisocyanate, 4,4'-diphenylmethane diisocyanate, and phenylene diisocyanate.
<5> The polymerizable composition according to any one of <1> to <4>, wherein the active hydrogen compound (B) is a polythiol compound (B1).
<6> The polymerizable composition according to <5>, wherein the polythiol compound (B1) contains at least one selected from the group consisting of 5,7-dimercaptomethyl-1,11-dimercapto-3,6,9-trithiaundecane, 4,7-dimercaptomethyl-1,11-dimercapto-3,6,9-trithiaundecane, 4,8-dimercaptomethyl-1,11-dimercapto-3,6,9-trithiaundecane, 4-mercaptomethyl-1,8-dimercapto-3,6-dithiaoctane, pentaerythritol tetrakis(3-mercaptopropionate), pentaerythritol tetrakis(2-mercaptoacetate), 2,5-bis(mercaptomethyl)-1,4-dithiane, bis(2-mercaptoethyl)sulfide, 1,1,3,3-tetrakis(mercaptomethylthio)propane, 4,6-bis(mercaptomethylthio)-1,3-dithiane, 2-(2,2-bis(mercaptomethylthio)ethyl)-1,3-dithietane, 1,1,2,2-tetrakis(mercaptomethylthio)ethane, 3-mercaptomethyl-1,5-dimercapto-2,4-dithiapentane, and tris(mercaptomethylthio)methane.
<7> The polymerizable composition according to any one of <1> to <6>, wherein the content of water is 100 ppm by mass or more with respect to the total amount of the polymerizable composition.
<8> A method of producing the polymerizable composition according to any one of <1> to <6>, the method comprising a step of mixing:
   a raw material composition (BX) containing the active hydrogen compound (B) and water, in which a content of water is 3,800 ppm by mass or less with respect to a total amount of the raw material composition (BX),
   the polyiso(thio)cyanate compound (A), and
   the nitrogen-containing compound (C).
<9> A resin, which is a cured product of the polymerizable composition according to any one of <1> to <7>.
<10> A molded body, comprising the resin according to <9>.
<11> An optical material, comprising the resin according to <9>.
<12> A lens, comprising the resin according to <9>.

According to one aspect of the disclosure, the followings are provided: a polymerizable composition containing a polyiso(thio)cyanate compound (A), an active hydrogen compound (B), a nitrogen-containing compound (C) which is at least one of a nitrogen-containing aromatic heterocyclic compound or a tertiary amine compound, and water, from which composition a resin in which cloudiness, bubbles, and devitrification are suppressed can be produced; a method of producing the polymerizable composition; and a resin, a molded body, and a lens, in which cloudiness, bubbles, and devitrification are suppressed.

### DESCRIPTION OF EMBODIMENTS

In the disclosure, those numerical ranges that are expressed with "to" each denote a range that includes the numerical values stated before and after "to" as the lower limit value and the upper limit value, respectively.

In the disclosure, when there are plural substances that correspond to a component of a composition, the indicated amount of the component in the composition means, unless otherwise specified, a total amount of the plural substances existing in the composition.

In a set of numerical ranges that are stated in a stepwise manner in the disclosure, the upper limit value or the lower limit value of one numerical range may be replaced with the upper limit value or the lower limit value of other numerical range. Further, in a numerical range stated in the disclosure, the upper limit value or the lower limit value of the numerical range may be replaced with a relevant value indicated in any of Examples.

### [Polymerizable Composition]

The polymerizable composition of the disclosure is a polymerizable composition, containing:
a polyiso(thio)cyanate compound (A);
an active hydrogen compound (B);
a nitrogen-containing compound (C) which is at least one of a nitrogen-containing aromatic heterocyclic compound or a tertiary amine compound; and
water,
wherein the content of water is 1,900 ppm by mass or less with respect to a total amount of the polymerizable composition.

According to the polymerizable composition of the disclosure, a resin in which cloudiness, bubbles, and devitrification are suppressed can be produced.

It is noted here that the effect of suppressing cloudiness and bubbles is an effect attributed to the nitrogen-containing compound (C) serving as a curing catalyst.

The effect of suppressing devitrification is an effect attributed to that the content of water is 1,900 ppm by mass or less with respect to a total amount of the polymerizable composition.

Particularly, when the nitrogen-containing compound (C) is used as a curing catalyst, cloudiness and striae can be suppressed; however, there are cases where devitrification (i.e., devitrification evaluated based on the degree of devitrification) cannot be suppressed.

In this regard, in the polymerizable composition of the disclosure, the content of water is 1,900 ppm by mass or less with respect to a total amount of the polymerizable composition, whereby the effect of suppressing devitrification can also be obtained while attaining the effect of suppressing cloudiness and striae.

### <Polyiso(thio)cyanate Compound (A)>

The polymerizable composition of the disclosure contains at least one polyiso(thio)cyanate compound (A).

The polyiso(thio)cyanate compound (A) is not particularly limited as long as it is a compound having at least two iso(thio)cyanate groups in one molecule.

Specific examples of the polyiso(thio)cyanate compound (A) include:
aliphatic polyisocyanate compounds, such as tetramethylene diisocyanate, pentamethylene diisocyanate, hexamethylene diisocyanate, heptamethylene diisocyanate, octamethylene diisocyanate, 2,2,4-trimethylhexamethylene diisocyanate, 2,4,4-trimethylhexamethylene diisocyanate, lysine diisocyanate methyl ester, lysine triisocyanate, and xylylene diisocyanate;
alicyclic polyisocyanate compounds, such as isophorone diisocyanate, bis(isocyanatomethyl)cyclohexane, bis(isocyanatocyclohexyl)methane, dicyclohexyldimethylmethane diisocyanate, 2,5-bis(isocyanatomethyl)bicyclo-[2.2.1]-heptane, 2,6-bis(isocyanatomethyl)bicyclo-[2.2.1]-heptane, 3,8-bis(isocyanatomethyl)tricyclodecane, 3,9-bis(isocyanatomethyl)tricyclodecane, 4,8-bis(isocyanatomethyl)tricyclodecane, and 4,9-bis(isocyanatomethyl)tricyclodecane;
aromatic polyisocyanate compounds, such as tolylene diisocyanate, 4,4'-diphenylmethane diisocyanate, diphenyl sulfide-4,4'-diisocyanate, and phenylene diisocyanate;
heterocyclic polyisocyanate compounds, such as 2,5-diisocyanatothiophene, 2,5-bis(isocyanatomethyl)thiophene, 2,5-diisocyanatotetrahydrothiophene, 2,5-bis(isocyanatomethyl)tetrahydrothiophene, 3,4-bis(isocyanatomethyl)tetrahydrothiophene, 2,5-diisocyanato-1,4-dithiane, 2,5-bis(isocyanatomethyl)-1,4-dithiane, 4,5-diisocyanato-1,3-dithiolane, and 4,5-bis(isocyanatomethyl)-1,3-dithiolane;
aliphatic polyisothiocyanate compounds, such as hexamethylene diisothiocyanate, lysine diisothiocyanate methyl ester, lysine triisothiocyanate, and xylylene diisothiocyanate;
alicyclic polyisothiocyanate compounds, such as isophorone diisothiocyanate, bis(isothiocyanatomethyl)cyclohexane, bis(isothiocyanatocyclohexyl)methane, cyclohexane diisothiocyanate, methylcyclohexane diisothiocyanate, 2,5-bis(isothiocyanatomethyl)bicyclo-[2.2.1]-heptane, 2,6-bis(isothiocyanatomethyl)bicyclo-[2.2.1]-heptane, 3,8-bis(isothiocyanatomethyl)tricyclodecane, 3,9-bis(isothiocyanatomethyl)tricyclodecane, 4,8-bis(isothiocyanatomethyl)tricyclodecane, and 4,9-bis(isothiocyanatomethyl)tricyclodecane;
aromatic polyisothiocyanate compounds, such as tolylene diisothiocyanate, 4,4'-diphenylmethane diisothiocyanate, and diphenyl disulfide-4,4'-diisothiocyanate; and
sulfur-containing heterocyclic polyisothiocyanate compounds, such as 2,5-diisothiocyanatothiophene, 2,5-bis(isothiocyanatomethyl)thiophene, 2,5-isothiocyanatotetrahydrothiophene, 2,5-bis(isothiocyanatomethyl)tetrahydrothiophene, 3,4-bis(isothiocyanatomethyl)tetrahydrothiophene, 2,5-diisothiocyanato-1,4-dithiane, 2,5-bis(isothiocyanatomethyl)-1,4-dithiane, 4,5-diisothiocyanato-1,3-dithiolane, and 4,5-bis(isothiocyanatomethyl)-1,3-dithiolane.

The polyiso(thio)cyanate compound may contain at least one selected from the above-exemplified compounds.

As the polyiso(thio)cyanate compound (A), for example, a halogen substitute such as a chlorine substitute or a bromine substitute, an alkyl substitute, an alkoxy substitute, a nitro substitute, a prepolymer-type product modified with a polyhydric alcohol, a carbodiimide-modified product, a urea-modified product, a burette-modified product, or a dimerization or trimerization reaction product, of any of the above-exemplified compounds can be used as well.

The polyiso(thio)cyanate compound (A) preferably contains a polyisocyanate compound, more preferably contains at least one selected from the group consisting of pentamethylene diisocyanate, hexamethylene diisocyanate, xylylene diisocyanate, isophorone diisocyanate, bis(isocyanatomethyl)cyclohexane, bis(isocyanatocyclohexyl)methane, 2,5-bis(isocyanatomethyl)bicyclo-[2.2.1]-heptane, 2,6-bis(isocyanatomethyl)bicyclo-[2.2.1]-heptane, tolylene diisocyanate, 4,4'-diphenylmethane diisocyanate, and phenylene diisocyanate.

When the polyiso(thio)cyanate compound (A) contains xylylene diisocyanate, the polyiso(thio)cyanate compound (A) may further contain at least one selected from the group consisting of the following compound (N1), the following compound (N2), and the following compound (N3).

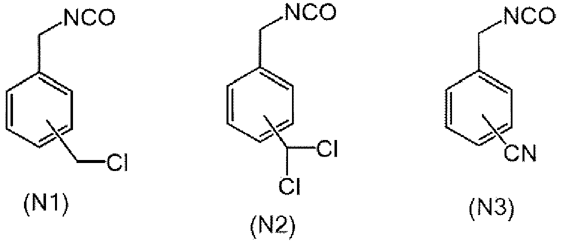

When the polyiso(thio)cyanate compound (A) contains xylylene diisocyanate and the compound (N1), the compound (N1) preferably has a peak area of 0.20 ppm or more with respect to a peak area of xylylene diisocyanate of 1 in gas chromatography measurement performed under the following GC conditions 1:

### -GC Conditions 1-

Filler: DB-1 (film thickness) 1.5 µm
Column: 0.53 mm in inner diameter × 60 m in length (manufactured by Agilent Technologies, Inc.)
Oven temperature: increased from 130°C to 220°C at 3°C/min, and further increased to 300°C at 10°C/min after reaching 220°C
Split ratio: pulsed splitless method
Inlet temperature: 280°C
Detector temperature: 300°C
Carrier gas: N₂ 158 kPa, H₂ 55 kPa, Air 45 kPa (constant pressure control)
Solvent: chloroform
Sample concentration: 2.0%-by-mass chloroform solution
Injection amount: 2 µL
Detection method: FID

The peak area of the compound (N1) is more preferably 5.0 ppm or more, still more preferably 50 ppm or more, yet still more preferably 100 ppm or more, with respect to a peak area of xylylene diisocyanate of 1.

The peak area of the compound (N1) is preferably 4,000 ppm or less, more preferably 3,000 ppm or less, still more preferably 2,000 ppm or less, yet still more preferably 1,500 ppm or less, further preferably 1,000 ppm or less, with respect to a peak area of xylylene diisocyanate of 1.

The peak area of the compound (N1) can be measured in accordance with the method described in the paragraph [0377] of Japanese Patent No. 6373536.

When the polyiso(thio)cyanate compound (A) contains xylylene diisocyanate and the compound (N2), the compound (N2) preferably has a peak area of 0.05 ppm or more with respect to a peak area of xylylene diisocyanate of 1 in gas chromatography measurement performed under the following GC conditions 2:

### -GC Conditions 2-

Column: HP-50+, 0.25 mm in inner diameter × 30 m in length × 0.25 µm in film thickness (manufactured by Hewlett-Packard Company)
Oven temperature: increased from 50°C to 280°C at 10°C/min, and held for 6 minutes after reaching 280°C
Split ratio: pulsed splitless method
Inlet temperature: 200°C
Detector temperature: 280°C
Carrier gas: He
Carrier gas flow rate: 1.0 ml/min (constant flow rate control)
Sample concentration: 1.0%-by-mass dichloromethane solution
Injection amount: 1.0 µL
Detection method: SIM (monitoring ion: m/z 180, 215) (content ratio of xylylene diisocyanate)

The peak area of the compound (N2) is more preferably 0.1 ppm or more, still more preferably 0.3 ppm or more, yet still more preferably 0.6 ppm or more, with respect to a peak area of xylylene diisocyanate of 1.

The peak area of the compound (N2) is preferably 200 ppm or less, more preferably 150 ppm or less, still more preferably 100 ppm or less, yet still more preferably 80 ppm or less, further preferably 70 ppm or less, yet further preferably 60 ppm or less, with respect to a peak area of xylylene diisocyanate of 1.

The peak area of the compound (N2) can be measured in accordance with the method described in the paragraphs [0375] and [0376] of Japanese Patent No. 6373536.

When the polyiso(thio)cyanate compound (A) contains xylylene diisocyanate and the compound (N3), the compound (N3) preferably has a peak area of 0.10 ppm or more with respect to a peak area of xylylene diisocyanate of 1 in gas chromatography measurement performed under the above-described GC conditions 1.

The peak area of the compound (N3) is more preferably 0.1 ppm or more, still more preferably 3.0 ppm or more, yet still more preferably 5.0 ppm or more, with respect to a peak area of xylylene diisocyanate of 1.

The peak area of the compound (N3) is preferably 1,000 ppm or less, more preferably 500 ppm or less, still more preferably 300 ppm or less, yet still more preferably 100 ppm or less, further preferably 75 ppm or less, with respect to a peak area of xylylene diisocyanate of 1.

The peak area of the compound (N3) can be measured in accordance with the method described in the paragraph [0377] of Japanese Patent No. 6373536.

The polyiso(thio)cyanate compound (A) has an acid content of preferably 3,000 ppm or less, more preferably 2,000 ppm or less, still more preferably 1,000 ppm or less, yet still more preferably 100 ppm or less, further preferably 50 ppm or less, yet further preferably 30 ppm or less, further more preferably less than 15 ppm.

A lower limit value of the acid content of the polyiso(thio)cyanate compound (A) is not particularly limited; however, it is, for example, 1 ppm.

The acid content of the polyiso(thio)cyanate compound (A) can be measured in accordance with the method described in the paragraph [0091] of WO 2021/256417.

The polyiso(thio)cyanate compound (A) may also contain a stabilizer.

When the polymerizable composition of the disclosure contains a polythiol compound (B1) as the below-described active hydrogen compound (B), a mixing ratio of the polythiol compound (B1) and the polyiso(thio)cyanate compound (A) is, in terms of a molar ratio of the mercapto groups contained in the polythiol compound (B1) to the iso(thio)cyanate groups of the polyiso(thio)cyanate compound (A) (mercapto groups/iso(thio)cyanate groups), preferably from 0.5 to 3.0, more preferably from 0.6 to 2.0, still more preferably from 0.8 to 1.3.

### <Active Hydrogen Compound (B)>

The polymerizable composition of the disclosure contains at least one active hydrogen compound (B).

In the disclosure, "active hydrogen compound" means a compound that contains an active hydrogen group.

In the disclosure, "active hydrogen group" means a hydroxy group, a mercapto group (i.e., a thiol group), a primary amino group, or a secondary amino group.

Examples of the active hydrogen compound (B) include:
a polythiol compound (B1) (i.e., a compound containing two or more mercapto groups (i.e., thiol groups)),
a polyol compound (B2) (i.e., a compound containing two or more hydroxy groups),
a hydroxythiol compound (B3) (i.e., a compound containing one or more hydroxy groups and one or more mercapto groups), and
a polyamine compound (B4) (i.e., a compound containing two or more amino groups).

With regard to these compounds, reference can be made as appropriate to the descriptions of WO 2021/153631 and WO 2021/153632.

### (Polythiol Compound (B1))

The active hydrogen compound (B) is preferably a polythiol compound (B1).

The polythiol compound (B1) is not particularly limited as long as it is a compound containing two or more mercapto groups.

The polythiol compound (B1) that can be contained in the polymerizable composition of the disclosure may be one kind of compound, or two or more kinds of compounds.

The polythiol compound (B1) preferably contains at least one selected from the group consisting of the following (hereinafter, also referred to as "polythiol T"):
5,7-dimercaptomethyl-1,11-dimercapto-3,6,9-trithiaundecane,
4,7-dimercaptomethyl-1,11-dimercapto-3,6,9-trithiaundecane,
4,8-dimercaptomethyl-1,11-dimercapto-3,6,9-trithiaundecane,
4-mercaptomethyl-1,8-dimercapto-3,6-dithiaoctane,
pentaerythritol tetrakis(2-mercaptoacetate),
pentaerythritol tetrakis(3-mercaptopropionate),
2,5-bis(mercaptomethyl)-1,4-dithiane,
bis(mercaptoethyl)sulfide,
1,1,3,3-tetrakis(mercaptomethylthio)propane,
4,6-bis(mercaptomethylthio)-1,3-dithiane,
2-(2,2-bis(mercaptomethylthio)ethyl)-1,3-dithietane,
1,1,2,2-tetrakis(mercaptomethylthio)ethane,
3-mercaptomethyl-1,5-dimercapto-2,4-dithiapentane,
tris(mercaptomethylthio)methane, and
ethylene glycol bis(3-mercaptopropionate).

The polythiol compound (B1) more preferably contains a polythiol T as a main component.

The expression "the polythiol compound (B1) contains a polythiol T as a main component" used herein means that a total content of the polythiol T with respect to a total amount of the polythiol compound (B1) is 50% or more.

The total content of the polythiol T with respect to a total amount of the polythiol compound (B1) is preferably 60% or more, more preferably 70% or more, still more preferably 80% or more.

The unit "%" used herein means a ratio (% by area) of a total area of all peaks of the polythiol T with respect to a total area of all peaks of the polythiol compound (B1), which ratio is determined by high-performance liquid chromatography.

Examples of a more specific aspect of the polythiol compound (B1) include:
an aspect in which the polythiol compound (B1) contains 4-mercaptomethyl-1,8-dimercapto-3,6-dithiaoctane (hereinafter, also referred to as "polythiol T1") as a main component;
an aspect in which the polythiol compound (B1) contains at least one selected from the group consisting of 4,8-dimercaptomethyl-1,11-dimercapto-3,6,9-trithiaundecane, 4,7-dimercaptomethyl-1,11-dimercapto-3,6,9-trithiaundecane, and 5,7-dimercaptomethyl-1,11-dimercapto-3,6,9-trithiaundecane (hereinafter, also referred to as "polythiol T2") as a main component;
an aspect in which the polythiol compound (B1) contains pentaerythritol tetrakis(3-mercaptopropionate) (hereinafter, also referred to as "polythiol component T3") as a main component;
an aspect in which the polythiol compound (B1) contains the polythiol T1 and the polythiol T3 as main components; and
an aspect in which the polythiol compound (B1) contains the polythiol T2 and the polythiol T3 as main components.

The meaning of the expression "contains ... as a main component" used herein is the same as that of the expression "contains ... as a main component" used in the above description of "polythiol T".

When the polythiol compound (B1) contains a compound containing three or more mercapto groups (e.g., at least one of the above-described polythiols T1 to T3), the polythiol compound (B1) may contain a compound in which at least one of the three or more mercapto groups contained in the compound containing three or more mercapto groups is substituted with a group represented by the following Formula (S1) (this compound is hereinafter also referred to as "compound (S1)"). By this, the polymerization reaction can be further accelerated.

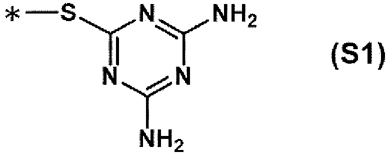

In Formula (S1), * represents a bonding position.

In the polythiol compound (B1) of an aspect that contains a compound containing three or more mercapto groups (e.g., at least one of the above-described polythiols T1 to T3) and the above-described compound (S1), when peak areas are measured by high-performance liquid chromatography, the peak area of the compound (S1) is preferably from 0.01 to 3.0, more preferably from 0.01 to 1.5, with respect to a peak area of the compound containing three or more mercapto groups of 100.

When the peak area of the compound (S1) is 0.01 or more with respect to a peak area of the compound containing three or more mercapto groups of 100, the polymerization reaction is further accelerated.

When the peak area of the compound (S1) is 3.0 or less with respect to a peak area of the compound containing three or more mercapto groups of 100, excellent controllability of the polymerization reaction is obtained.

In the polymerizable composition of the disclosure, a total content of the polyiso(thio)cyanate compound (A) and the active hydrogen compound (B) is preferably 70% by mass or more, more preferably 80% by mass or more, still more preferably 90% by mass or more, with respect to a total amount of the polymerizable composition.

An upper limit of the total content of the polyiso(thio)cyanate compound (A) and the active hydrogen compound (B) is, for example, 98% by mass or less with respect to a total amount of the polymerizable composition.

### <Nitrogen-Containing Compound (C)>

The polymerizable composition of the disclosure contains at least one nitrogen-containing compound (C) which is at least one of a nitrogen-containing aromatic heterocyclic compound or a tertiary amine compound.

The nitrogen-containing compound (C) can function as a curing catalyst.

The nitrogen-containing compound (C) contributes to the suppression of cloudiness and striae in a resin obtained by curing the polymerizable composition.

The nitrogen-containing aromatic heterocyclic compound used as the nitrogen-containing compound (C) is not particularly limited; however, it is preferably a compound represented by the below-described Formula (1).

The tertiary amine compound used as the nitrogen-containing compound (C) is also not particularly limited; however, it is preferably a compound represented by the below-described Formula (2).

The nitrogen-containing compound (C) preferably contains at least one of a compound represented by the below-described Formula (1) or a compound represented by the below-described Formula (2).

### (Compound Represented by Formula (1))

The compound represented by Formula (1) is as follows.

The compound represented by Formula (1) is included in the concept of nitrogen-containing aromatic heterocyclic compound.

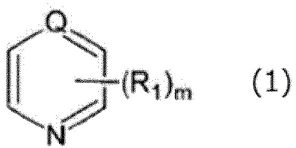

In Formula (1), each of m R₁s independently represents a linear alkyl group having from 1 to 20 carbon atoms, a branched alkyl group having from 3 to 20 carbon atoms, a cycloalkyl group having from 3 to 20 carbon atoms, or a halogen atom; Q represents a carbon atom or a nitrogen atom; and m represents an integer from 0 to 5.

In Formula (1), each of m R₁s independently represents a linear alkyl group having from 1 to 20 carbon atoms, a branched alkyl group having from 3 to 20 carbon atoms, a cycloalkyl group having from 3 to 20 carbon atoms, or a halogen atom; Q represents a carbon atom, a nitrogen atom, or an oxygen atom; and m represents an integer from 0 to 5.

In Formula (1), m is preferably an integer from 0 to 3, more preferably an integer from 1 to 3.

In Formula (1), examples of the linear alkyl group having from 1 to 20 carbon atoms, which is represented by R₁, include a methyl group, an ethyl group, an n-propyl group, an *n-*butyl group, a pentyl group, a hexyl group, a heptyl group, an n-octyl group, a nonyl group, a decyl group, and a dodecyl group.

In Formula (1), examples of the branched alkyl group having from 3 to 20 carbon atoms, which is represented by R₁, include an isopropyl group, an isobutyl group, a *t*-butyl group, an isopentyl group, an isooctyl group, a 2-ethylhexyl group, a 2-propylpentyl group, and an isodecyl group.

In Formula (1), examples of the cycloalkyl group having from 3 to 20 carbon atoms, which is represented by R₁, include a cyclopropyl group, a cyclobutyl group, a cyclopentyl group, a cyclohexyl group, a cycloheptyl group, and a cyclooctyl group.

In Formula (1), R₁ is preferably a linear alkyl group having from 1 to 20 carbon atoms, or a halogen atom, more preferably a linear alkyl group having from 1 to 3 carbon atoms, or a chlorine atom.

The compound represented by Formula (1) is preferably at least one selected from the group consisting of 2-methylpyrazine, pyridine, *α*-picoline, *β*-picoline, *γ*-picoline, 2,6-lutidine, 3,5-lutidine, 2,4,6-trimethylpyridine, 3-chloropyridine, 2-ethylpyridine, and 3-ethylpyridine.

### (Compound Represented by Formula (2))

The compound represented by Formula (2) is as follows.

The compound represented by Formula (2) is included in the concept of tertiary amine compound.

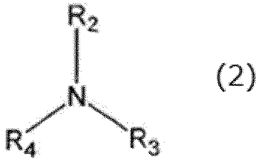

In Formula (2), each of R₂, R₃, and R₄ independently represents a linear alkyl group having from 3 to 20 carbon atoms, a branched alkyl group having from 3 to 20 carbon atoms, a cycloalkyl group having from 3 to 20 carbon atoms, or an allyl group. R₂ and R₃ are optionally bonded to each other to form a ring.

In Formula (2), each of R₂, R₃, and R₄ is independently preferably a linear alkyl group having from 3 to 20 carbon atoms, more preferably a linear alkyl group having from 3 to 10 carbon atoms, particularly preferably a linear alkyl group having from 5 to 10 carbon atoms.

Examples of the linear alkyl group having from 3 to 20 carbon atoms, which is represented by R₂, R₃, or R₄, include an *n*-propyl group, an *n*-butyl group, a pentyl group, a hexyl group, a heptyl group, an *n*-octyl group, a nonyl group, a decyl group, and a dodecyl group.

R₂ and R₃ may be bonded to each other to form a ring.

In other words, the compound represented by Formula (2) may be a cyclic amine compound having a structure in which R₂ and R₃ are bonded to each other to form a ring.

Examples of the cyclic amine compound include 1-propylpiperidine, 1-butylpiperidine, 1-cyclohexylpiperidine, 1-butylpyrrolidine, and 1-cyclohexylpyrrolidine.

The compound represented by Formula (2) is preferably at least one selected from the group consisting of triallylamine and trioctylamine.

The content of the nitrogen-containing compound (C) in the polymerizable composition (i.e., a total content of the nitrogen-containing aromatic heterocyclic compound and the tertiary amine compound; e.g., a total content of the compound represented by Formula (1) and the compound represented by Formula (2)) is preferably from 0.01% by mass to 1% by mass, more preferably from 0.01% by mass to 0.5% by mass, with respect to a total content of the polyiso(thio)cyanate compound (A) and the active hydrogen compound (B).

The content of the nitrogen-containing compound (C) in the polymerizable composition (i.e., a total content of the nitrogen-containing aromatic heterocyclic compound and the tertiary amine compound; e.g., a total content of the compound represented by Formula (1) and the compound represented by Formula (2)) is preferably from 0.01% by mass to 1% by mass, more preferably from 0.01% by mass to 0.5% by mass, with respect to a total amount of the polymerizable composition.

With regard to the content of the nitrogen-containing compound (C) in the polymerizable composition, reference may be made to WO 2021/153631 and WO 2021/153632.

The polymerizable composition of the disclosure may contain, as a curing catalyst, a compound other than the above-described nitrogen-containing compound (C).

However, the ratio of the nitrogen-containing compound (C) in the curing catalyst is preferably from 50% by mass to 100% by mass, more preferably from 60% by mass to 100% by mass, still more preferably from 80% by mass to 100% by mass, yet still more preferably from 90% by mass to 100% by mass.

### <Water>

The polymerizable composition of the disclosure contains water.

The content of water is 1,900 ppm by mass or less with respect to a total amount of the polymerizable composition.

As described above, generally, when the nitrogen-containing compound (C) is incorporated as a curing catalyst in a polymerizable composition containing the polyiso(thio)cyanate compound (A) and the active hydrogen compound (B), devitrification in the resulting resin cannot be suppressed in some cases.

In contrast, in the polymerizable composition of the disclosure, the content of water is 1,900 ppm by mass or less with respect to a total amount of the polymerizable composition, whereby devitrification in the resulting resin is suppressed.

From the standpoint of more effectively obtaining the devitrification-suppressing effect, the content of water is preferably 1,500 ppm by mass or less, more preferably 1,100 ppm by mass or less, with respect to a total amount of the polymerizable composition.

From the standpoint of further improving the production suitability of a polythiol composition and/or the polymerizability of monomers, the content of water is preferably 10 ppm by mass or more, more preferably 100 ppm by mass or more, still more preferably 200 ppm by mass or more, with respect to a total amount of the polymerizable composition.

### <Other Components>

The polymerizable composition of the disclosure may also contain other components in addition to the above-described components.

Examples of the other components include an internal mold release agent, a resin modifier, a chain extender, a crosslinking agent, a radical scavenger, a light stabilizer, a UV absorber, an antioxidant, an oil-soluble dye, a filler, an adhesion improver, an antimicrobial agent, an antistatic agent, a dye, a fluorescent brightener, a fluorescent pigment, and a blue ink agent such as an inorganic pigment.

As the internal mold release agent, an acidic phosphoric acid ester can be used. Examples of the acidic phosphoric acid ester include phosphoric acid monoesters and phosphoric acid diesters, and these may be used singly, or in combination of two or more kinds thereof.

The polymerizable composition of the disclosure may further contain a prepolymer which is a polymer (i.e., a reaction product) of the polyiso(thio)cyanate compound (A) and the active hydrogen compound (B) and contains a polymerizable functional group.

Examples of the polymerizable functional group include an iso(thio)cyanato group, which is a polymerizable functional group contained in the polyiso(thio)cyanate compound (A), and an active hydrogen group (e.g., a mercapto group) contained in the active hydrogen compound (B).

With regard to the prepolymer, reference can be made to, for example, WO 2021/153631 and WO 2021/153632.

A method of producing the above-described polymerizable composition of the disclosure is not particularly limited, and any known method of mixing the above-described components can be applied as appropriate.

One example of the method of producing the polymerizable composition of the disclosure (hereinafter, also referred to as "production method A") is as follows; however, the method of producing the polymerizable composition of the disclosure is not limited to the production method A.

### [One Example of Method of Producing Polymerizable Composition (Production Method A)]

The production method A includes the step of mixing (hereinafter, also referred to as "mixing step"):
a raw material composition (BX) containing the active hydrogen compound (B) and water, in which the content of water is 3,800 ppm by mass or less with respect to a total amount of the raw material composition (BX),
the polyiso(thio)cyanate compound (A), and
the nitrogen-containing compound (C).

In the mixing step, in addition to the above-described components, components other than the above-described components may be mixed as well.

The production method A may include other steps in addition to the mixing step.

In the mixing step of the production method A, a raw material composition (BX) is used.

The raw material composition (BX) is a composition containing the active hydrogen compound (B) and water, in which the content of water is 3,800 ppm by mass or less with respect to a total amount of the raw material composition (BX).

The content of water in the raw material composition (BX) is preferably 2,200 ppm by mass or less, more preferably 1,000 ppm by mass or less.

The content of water in the raw material composition (BX) is preferably 10 ppm by mass or more, more preferably 100 ppm by mass or more, still more preferably 200 ppm by mass or more, yet still more preferably 300 ppm by mass or more, further preferably 400 ppm by mass or more.

In the production method A, the order of mixing the raw materials (i.e., the raw material composition (BX), the polyiso(thio)cyanate compound (A), and the nitrogen-containing compound (C)) (i.e., the order of putting the raw materials into a container used for mixing) is not particularly limited.

For example, the polymerizable composition may be obtained by putting the total amount of the raw materials into the container at once and mixing them, or by adding the raw materials little by little to the container while mixing.

Alternatively, first, a portion of the total amount of raw materials may be put into the container to form a prepolymer having a polymerizable functional group as a polymer of the polyiso(thio)cyanate compound (A) and the active hydrogen compound (B), and the remainder of the raw materials may be subsequently added to obtain a polymerizable composition that contains the polyiso(thio)cyanate compound (A), the active hydrogen compound (B), the nitrogen-containing compound (C), the prepolymer having a polymerizable functional group, and water.

### [Resin and Molded Body]

The resin of the disclosure is a cured product of the above-described polymerizable composition of the disclosure.

The molded body of the disclosure contains the resin of the disclosure.

In other words, the resin of the disclosure can be produced by curing the above-described polymerizable composition of the disclosure, specifically, by polymerizing and curing the monomers contained in the polymerizable composition of the disclosure.

Examples of a method of polymerizing the monomers contained in the polymerizable composition of the disclosure include cast polymerization. By cast polymerization, the molded body of the disclosure that contains the resin of the disclosure (i.e., a cured product of the polymerizable composition of the disclosure) can be obtained.

In the cast polymerization, first, the polymerizable composition according to one example of the disclosure is injected between a pair of casting molds held by a gasket, a tape, or the like. In this process, if necessary, a defoaming treatment, a filtration treatment, and the like may be performed.

Next, the monomers contained in the composition injected between the casting molds are polymerized to cure the composition between the casting molds and to thereby obtain a cured product. Subsequently, the cured product is removed from the casting molds to obtain a cured product.

The polymerization of the monomers may also be performed by heating the polymerizable composition of the disclosure. This heating can be performed using, for example, a heating apparatus equipped with a mechanism for heating a material to be heated in an oven, water, or the like.

The conditions for the polymerization of the monomers contained in the polymerizable composition of the disclosure (e.g., polymerization temperature and polymerization time) are set as appropriate, taking into consideration the formulation of the composition, the types and the amounts of the monomers used in the composition, the type and the amount of a polymerization catalyst used in the composition, the shape of the mold, and the like.

The polymerization temperature is, for example, from -50°C to 150°C, or from 10°C to 150°C.

The polymerization time is, for example, from 1 hour to 200 hours, or from 1 hour to 80 hours.

The resin of the disclosure or a molded body containing the resin may also be obtained by performing a treatment such as annealing after the polymerization of the monomers.

The temperature of this annealing is, for example, from 50°C to 150°C, from 90°C to 140°C, or from 100°C to 130°C.

### [Optical Material]

The optical material of the disclosure includes the above-described resin of the disclosure.

The optical material of the disclosure can be produced by, for example, the above-described cast polymerization.

The optical material of the disclosure may be formed of the resin of the disclosure, or may include the resin of the disclosure and other elements.

Examples of the other elements include other members, and a coating layer provided on the resin of the disclosure.

Examples of the optical material of the disclosure include lenses (e.g., eyeglass lenses, camera lenses, and polarizing lenses) and light-emitting diodes (LEDs).

### [Lens]

The lens of the disclosure is one example of the optical material of the disclosure, and includes the above-described resin of the disclosure.

The lens of the disclosure can be produced by, for example, the above-described cast polymerization.

The lens of the disclosure may be formed of the resin of the disclosure, or may include the resin of the disclosure and other elements.

Examples of the other elements include other members, and a coating layer provided on the resin of the disclosure.

Examples of the lens of the disclosure include eyeglass lenses, camera lenses, and polarizing lenses.

An eyeglass lens will now be described as one example of the lens of the disclosure.

The eyeglass lens includes the resin of the disclosure that is molded into a desired lens shape.

The eyeglass lens preferably further includes a coating layer provided on one or both sides of the resin.

Specific examples of the coating layer include a primer layer, a hard coat layer, an anti-reflection layer, an anti-fog coating layer, an anti-fouling layer, and a water-repellent layer. These coating layers may each be used singly, or plural coating layers may be used in the form of a multilayer structure.

When coating layers are formed on both sides of a cured product, the same coating layer may be formed on the respective sides, or different coating layers may be formed on the respective sides.

Components of the coating layer can be selected as appropriate in accordance with the intended purpose.

Examples of the components of the coating layer include a resin (e.g., a urethane resin, an epoxy resin, a polyester resin, a melamine resin, or a polyvinyl acetal resin), an infrared absorber, a light stabilizer, an antioxidant, a photochromic compound, a dye, a pigment, and an antistatic agent.

With regard to the eyeglass lens and the coating layer, reference can be made as appropriate to the descriptions of known documents, such as Japanese Patent Application Laid-Open (JP-A) No. 2002-194083 and WO 2017/047745.

### EXAMPLES

Examples of the disclosure will now be described; however, the disclosure is not limited to the below-described Examples.

It is noted here that, unless otherwise specified, "part(s)" and "%" are based on mass.

### [Examples 1 to 3 and Comparative Examples 1 and 2]

### <Production of Polythiol Compound (B1-1)>

A polythiol compound (B1-1) containing a polythiol T1 as a main component was produced. The polythiol compound (B1-1) is one example of the active hydrogen compound (B). The details are described below.

Into a reactor, 124.6 parts by mass of 2-mercaptoethanol and 18.3 parts by mass of deaerated water were charged. To this reactor, 101.5 parts by mass of a 32%-by-mass aqueous sodium hydroxide solution was added dropwise at a temperature of from 12°C to 35°C over a period of 40 minutes, after which 73.6 parts by mass of epichlorohydrin was added dropwise at a temperature of from 29°C to 36°C over a period of 4.5 hours, and this was followed by 40-minute stirring. As a result, 1,3-bis(2-hydroxyethylthio)-2-propanol was generated in the reactor. This generation was confirmed by NMR data.

Next, into the reactor, 331.5 parts by mass of 35.5%-by-mass hydrochloric acid was charged, and 183.8 parts by mass of thiourea having a purity of 99.90% by mass was subsequently charged, after which the resultant was stirred under reflux at 110°C for 3 hours to perform a thiuronium chlorination reaction. Then, after cooling the resulting liquid in the reactor to 45°C, 320.5 parts by mass of toluene was added thereto, and the thus obtained liquid was cooled to 31°C, and 243.1 parts by mass of a 25%-by-mass aqueous ammonia solution was subsequently charged thereto at a temperature of 31°C to 41°C over a period of 44 minutes, after which the resultant was stirred at a temperature of from 54°C to 62°C for 3 hours to perform a hydrolysis reaction. As a result, a toluene solution of a polythiol compound (B1-1) containing a polythiol T1 (i.e., 4-mercaptomethyl-1,8-dimercapto-3,6-dithiaoctane) as a main component was obtained. This toluene solution was acid-washed with 162.8 parts by mass of 35.5%-by-mass hydrochloric acid at a temperature of from 35°C to 43°C for 1 hour. An operation of washing the thus acid-washed toluene solution with 174.1 parts by mass of deaerated water at a temperature of from 35°C to 45°C for 30 minutes was performed twice. The toluene solution after the second washing with deaerated water was washed with 162.1 parts by mass of 0.1%-by-mass aqueous ammonia for 30 minutes. After this washing with aqueous ammonia, an operation of washing the toluene solution with 174.2 parts by mass of deaerated water at a temperature of 35°C to 45°C for 30 minutes was performed twice. Thereafter, toluene and a trace amount of water were removed from the toluene solution under reduced pressure with heating, and the resultant was treated by silica gel column chromatography and then vacuum-filtered through a 1.2-µm PTFE-type membrane filter, whereby a polythiol compound (B1-1) (205.0 parts by mass) containing the polythiol T1 as a main component was obtained.

### <Preparation of Raw Material Composition (BX)>

The polythiol compound (B1-1) obtained in the above-described manner was mixed with water to obtain a raw material composition (BX).

The mixing ratio of the polythiol compound (B1-1) and water was adjusted such that the content of water (% by mass) with respect to a total amount of the raw material composition (BX) was the value shown in Table 1.

The content of water with respect to a total amount of the raw material composition (BX) was measured using a Karl Fischer moisture meter (MKC-710, manufactured by Kyoto Electronics Manufacturing Co., Ltd.).

### <Preparation of Polymerizable Composition>

After mixing m-xylylene diisocyanate (hereinafter, also referred to as "NCO1") (52 parts by mass) as the polyiso(thio)cyanate compound (A) with a UV absorber VIOSORB583 (manufactured by Kyodo Chemical Co., Ltd.) (1.0 parts by mass), the resultant was mixed with 3,5-lutidine (0.03 parts by mass) as the nitrogen-containing compound (C) and JP-506H (acidic phosphate, manufactured by Johoku Chemical Co., Ltd.) (0.075 parts by mass) as an internal mold release agent at 20°C to prepare a mixture, which was subsequently defoamed at 600 Pa for 1 hour.

Next, the raw material composition (BX) that had been defoamed in advance at 600 Pa for 1 hour was added thereto in an amount of 47% by mass with respect to a total amount of the resulting composition, and the resultant was mixed at 20°C to obtain a polymerizable composition.

The content of water (ppm by mass) with respect to a total amount of the thus obtained polymerizable composition was measured using a Karl Fischer moisture meter (MKC-710, manufactured by Kyoto Electronics Manufacturing Co., Ltd.) and found to be the value shown in Table 1.

### <Production of Resin Molded Body>

Next, the thus obtained polymerizable composition was defoamed at 600 Pa for 10 minutes.

The thus defoamed polymerizable composition was filtered through a 1-µm TEFLON (registered trademark) filter, and the resulting filtrate was injected between a pair of glass molds immobilized by a tape, after which this pair of glass molds was placed in an oven, and the oven internal temperature was set at 30°C. Next, the oven internal temperature was raised from 30°C to 70°C over a period of 1.5 hours and then from 70°C to 120°C over a period of 0.5 hours, and subsequently maintained at 120°C for 1 hour, after which the oven internal temperature was lowered from 120°C to 70°C over a period of 1 hour. By the above-described process, the monomers (i.e., NCO1 and the polythiol compound (B1-1)) contained in the polymerizable composition were polymerized to form a resin-containing molded body (i.e., a cured product of the polymerizable composition) between the pair of glass molds.

Thereafter, the inside of the oven was cooled, and the pair of glass molds was subsequently taken out of the oven, after which the resin-containing molded body (hereinafter, referred to as "resin molded body") was removed from the pair of glass molds.

The thus obtained resin molded body was annealed at 120°C for 1 hour to obtain a circular flat lens of 9.0 mm in thickness and 75 mm in diameter.

### <Measurement and Evaluation of Lens>

The thus obtained circular flat lens (i.e., annealed resin molded body) was evaluated as follows.

The results thereof are shown in Table 1.

In Table 1, "B1-1" means the polythiol compound (B1-1).

### (Bubbles)

The lens was visually observed to evaluate bubbles in the lens in accordance with the following evaluation criteria.

In the following evaluation criteria, the rank "A" represents the greatest suppression of bubble formation.

### -Evaluation Criteria for Bubbles-

A: Bubble formation was not confirmed over the entire lens.
B: Bubble formation was confirmed in some parts of the lens.
C: Bubble formation was confirmed throughout the lens.

### (Striae)

The lens was visually observed to evaluate striae in the lens in accordance with the following evaluation criteria.

In the following evaluation criteria, the rank "A" represents the greatest suppression of striae formation.

### -Evaluation Criteria for Striae-

A: Striae formation was not confirmed over the entire lens.
B: Striae formation was confirmed in some parts of the lens.
C: Striae formation was confirmed throughout the lens.

### (Devitrification)

Light from a light source (LUMINAR ACE LA-150A, manufactured by Hayashi-Repic Co., Ltd.) was transmitted through the lens in a dark place. An image of the light transmitted through the lens was captured into an image processor (manufactured by Ube Information Systems, Inc.), and the captured image was shade-processed. The degree of shading of the processed image was quantified for every pixel, and an average of the numerical values of the degree of shading of the pixels was obtained to determine the degree of devitrification of the lens.

Based on the thus determined degree of devitrification, devitrification of the lens was evaluated in accordance with the following evaluation criteria.

In the following evaluation criteria, the rank "A" represents the greatest suppression of devitrification of the lens.

### -Evaluation Criteria for Devitrification-

A: The degree of devitrification was less than 35.
B: The degree of devitrification was 35 or more but less than 50.
C: The degree of devitrification was 50 or more.

### [Example 4 and Comparative Examples 3 and 4]

### <Production of Polythiol Compound (B1-1)>

A polythiol compound (B 1-1) was produced in the same manner as in Example 1.

### <Production of Polythiol Compound (B1-2)>

A polythiol compound (B1-2) containing a polythiol T3 (i.e., pentaerythritol tetrakis(3-mercaptopropionate)) as a main component was produced. The polythiol compound (B1-2) is one example of the active hydrogen compound (B). The details are described below.

Into a four-necked reaction flask to which a stirrer, a Dean-Stark tube, a nitrogen gas purge tube, and a thermometer were attached, 136.9 parts by mass of pentaerythritol having a purity of 99.5%, 406.3 parts by mass of 3-mercaptopropionic acid, 3.8 parts by mass of*p-*toluenesulfonic acid monohydrate, and 185.2 parts by mass of toluene were added to obtain a mixture. In this process, the molar ratio of 3-mercaptopropionic acid to pentaerythritol was 3.80.

The thus obtained mixture was heated using an oil bath. After 120 minutes from the start of heating, the mixture started to reflux when the internal temperature reached 97°C (oil bath temperature: 113°C). After the start of reflux, the mixture was allowed to react for 7 hours (internal temperature: from 97 to 121°C).

During the reaction, water generated as a by-product under reflux was continuously extracted from the system. The amount of the water extracted from the system was 93.2% of the theoretical amount of generated water.

After the reaction, the reaction solution was cooled and subsequently washed with a base and then with water in this order.

From the reaction solution after the washing with water, toluene and a trace amount of water were removed under reduced pressure with heating. The remaining reaction solution was filtered through a PTFE-type membrane filter, whereby 462.3 parts by mass of a polythiol compound (B1-2) containing the polythiol T3 as a main component was obtained.

### <Preparation of Raw Material Composition (BX)>

The polythiol compound (B1-1) obtained in the above-described manner was mixed with the polythiol compound (B1-2) and water to obtain a raw material composition (BX).

The mixing ratio of the polythiol compound (B1-1), the polythiol compound (B1-2), and water was adjusted such that a mass ratio [polythiol compound (B1-1):polythiol compound (B1-2)] of 1:1 was obtained, and that the content of water (% by mass) with respect to a total amount of the raw material composition (BX) was the value shown in Table 1.

The content of water with respect to a total amount of the raw material composition (BX) was measured using a Karl Fischer moisture meter (MKC-710, manufactured by Kyoto Electronics Manufacturing Co., Ltd.).

### <Preparation of Polymerizable Composition>

After mixing a mixture of 2,5-bis(isocyanatomethyl)bicyclo-[2.2.1]-heptane and 2,6-bis(isocyanatomethyl)bicyclo-[2.2.1]-heptane (hereinafter, also referred to as "NCO2") (50.6 parts by mass) as the polyiso(thio)cyanate compound (A) with a UV absorber VIOSORB583 (manufactured by Kyodo Chemical Co., Ltd.) (1.0 parts by mass), the resultant was mixed with 3,5-lutidine (0.20 parts by mass) as the nitrogen-containing compound (C) and JP-506H (acidic phosphate, manufactured by Johoku Chemical Co., Ltd.) (0.10 parts by mass) as an internal mold release agent at 20°C to prepare a mixture, which was subsequently defoamed at 600 Pa for 1 hour.

Next, the raw material composition (BX) that had been defoamed in advance at 600 Pa for 1 hour was added thereto in an amount of 49% by mass with respect to a total amount of the resulting composition, and the resultant was mixed at 20°C to obtain a polymerizable composition.

The content of water (ppm by mass) with respect to a total amount of the thus obtained polymerizable composition was measured using a Karl Fischer moisture meter (MKC-710, manufactured by Kyoto Electronics Manufacturing Co., Ltd.) and found to be the value shown in Table 1.

### <Production of Resin Molded Body>

Using the thus obtained polymerizable composition, a resin molded body was obtained in the same manner as in Example 1.

The thus obtained resin molded body was annealed at 120°C for 1 hour to obtain a circular flat lens of 9.0 mm in thickness and 75 mm in diameter.

### <Measurement and Evaluation of Lens>

For the thus obtained circular flat lens (i.e., annealed resin molded body), the same evaluations were performed as in Example 1.

The results thereof are shown in Table 1.

In Table 1, "B1-1" means the polythiol compound (B1-1), and "B1-2" means the polythiol compound (B1-2).

**[Table 1]**

| | | Example 1 | Example 2 | Example 3 | Example 4 | Comparative Example 1 | Comparative Example 2 | Comparative Example 3 | Comparative Example 4 |
|---|---|---|---|---|---|---|---|---|---|
| Content of water with respect to whole raw material composition (BX) (ppm by mass) | | 458 | 978 | 2,141 | 2,222 | 4,149 | 6,211 | 4,434 | 6,636 |
| Polymerizable composition | Polyiso(thio)cyanate compound (A) | NCO1 | NCO1 | NCO1 | NCO2 | NCO1 | NCO1 | NCO2 | NCO2 |
| | Active hydrogen compound (B) | B1-1 | B1-1 | B1-1 | B1-1 + B1-2 | B1-1 | B1-1 | B1-1 + B1-2 | B1-1 + B1-2 |
| | Nitrogen-containing compound (C) | 3,5-lutidine | 3,5-lutidine | 3,5-lutidine | 3,5-lutidine | 3,5-lutidine | 3,5-lutidine | 3,5-lutidine | 3,5-lutidine |
| | Content of water with respect to whole polymerizable composition (ppm by mass) | 218 | 465 | 1,018 | 1,079 | 1,974 | 2,958 | 2,156 | 3,231 |
| Evaluation results of lens | Bubbles | A | A | A | A | A | B | A | C |
| | Striae | A | A | A | A | A | - | A | - |
| | Devitrification | A | A | A | A | C | C | B | - |

As shown in Table 1, in Examples 1 to 3 where a polymerizable composition which contained the polyiso(thio)cyanate compound (A), the active hydrogen compound (B), the nitrogen-containing compound (C), and water, and had a water content of 1,900 ppm by mass or less with respect to a total amount of the polymerizable composition was used, bubbles, striae, and devitrification were suppressed in the obtained lenses (i.e., resin molded bodies).

In contrast to these Examples 1 to 3, in Comparative Example 1 where a polymerizable composition which contained the polyiso(thio)cyanate compound (A), the active hydrogen compound (B), the nitrogen-containing compound (C), and water, and had a water content of more than 1,900 ppm by mass with respect to a total amount of the polymerizable composition was used, bubbles and striae were suppressed in the obtained lens (i.e., resin molded body); however, devitrification was not suppressed.

The disclosure of Japanese Patent Application No. 2023-122891 filed on July 27, 2023 is hereby incorporated by reference in its entirety.

All the documents, patent applications and technical standards that are described in the present specification are hereby incorporated by reference to the same extent as if each individual document, patent application or technical standard is concretely and individually described to be incorporated by reference.

## Claims

1. A polymerizable composition, comprising:
a polyiso(thio)cyanate compound (A);
an active hydrogen compound (B);
a nitrogen-containing compound (C), which is at least one of a nitrogen-containing aromatic heterocyclic compound or a tertiary amine compound; and
water,
wherein a content of water is 1,900 ppm by mass or less with respect to a total amount of the polymerizable composition.

2. The polymerizable composition according to claim 1, wherein the nitrogen-containing compound (C) contains at least one of a compound represented by the following Formula (1) or a compound represented by the following Formula (2): 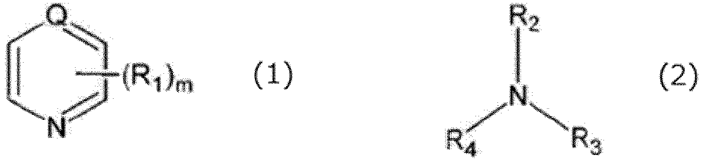
wherein, in Formula (1), each of m R₁s independently represents a linear alkyl group having from 1 to 20 carbon atoms, a branched alkyl group having from 3 to 20 carbon atoms, a cycloalkyl group having from 3 to 20 carbon atoms, or a halogen atom; Q represents a carbon atom or a nitrogen atom; and m represents an integer from 0 to 5, and
wherein, in Formula (2), each of R₂, R₃, and R₄ independently represents a linear alkyl group having from 3 to 20 carbon atoms, a branched alkyl group having from 3 to 20 carbon atoms, a cycloalkyl group having from 3 to 20 carbon atoms, or an allyl group; and R₂ and R₃ are optionally bonded to each other to form a ring.

3. The polymerizable composition according to claim 2, wherein:
the compound represented by Formula (1) is at least one selected from the group consisting of 2-methylpyrazine, pyridine, *α*-picoline, *β*-picoline, *γ*-picoline, 2,6-lutidine, 3,5-lutidine, 2,4,6-trimethylpyridine, 3-chloropyridine, 2-ethylpyridine, and 3-ethylpyridine, and
the compound represented by Formula (2) is at least one selected from the group consisting of triallylamine and trioctylamine.

4. The polymerizable composition according to claim 1, wherein the polyiso(thio)cyanate compound (A) contains at least one selected from the group consisting of pentamethylene diisocyanate, hexamethylene diisocyanate, xylylene diisocyanate, isophorone diisocyanate, bis(isocyanatomethyl)cyclohexane, bis(isocyanatocyclohexyl)methane, 2,5-bis(isocyanatomethyl)bicyclo-[2.2.1]-heptane, 2,6-bis(isocyanatomethyl)bicyclo-[2.2.1]-heptane, tolylene diisocyanate, 4,4'-diphenylmethane diisocyanate, and phenylene diisocyanate.

5. The polymerizable composition according to claim 1, wherein the active hydrogen compound (B) is a polythiol compound (B1).

6. The polymerizable composition according to claim 5, wherein the polythiol compound (B1) contains at least one selected from the group consisting of 5,7-dimercaptomethyl-1,11-dimercapto-3,6,9-trithiaundecane, 4,7-dimercaptomethyl-1,11-dimercapto-3,6,9-trithiaundecane, 4,8-dimercaptomethyl-1,11-dimercapto-3,6,9-trithiaundecane, 4-mercaptomethyl-1,8-dimercapto-3,6-dithiaoctane, pentaerythritol tetrakis(3-mercaptopropionate), pentaerythritol tetrakis(2-mercaptoacetate), 2,5-bis(mercaptomethyl)-1,4-dithiane, bis(2-mercaptoethyl)sulfide, 1,1,3,3-tetrakis(mercaptomethylthio)propane, 4,6-bis(mercaptomethylthio)-1,3-dithiane, 2-(2,2-bis(mercaptomethylthio)ethyl)-1,3-dithietane, 1,1,2,2-tetrakis(mercaptomethylthio)ethane, 3-mercaptomethyl-1,5-dimercapto-2,4-dithiapentane, and tris(mercaptomethylthio)methane.

7. The polymerizable composition according to claim 1, wherein the content of water is 100 ppm by mass or more with respect to the total amount of the polymerizable composition.

8. A method of producing the polymerizable composition according to claim 1, the method comprising a step of mixing:
a raw material composition (BX) containing the active hydrogen compound (B) and water, in which a content of water is 3,800 ppm by mass or less with respect to a total amount of the raw material composition (BX),
the polyiso(thio)cyanate compound (A), and
the nitrogen-containing compound (C).

9. A resin, which is a cured product of the polymerizable composition according to any one of claims 1 to 7.

10. A molded body, comprising the resin according to claim 9.

11. An optical material, comprising the resin according to claim 9.

12. A lens, comprising the resin according to claim 9.
